# EUROPEAN PATENT APPLICATION

(11) **EP 4 369 541 A1**
(43) Date of publication of application: **15.05.2024**
(21) Application number: 23207589.5
(22) Date of filing: 03.11.2023
(51) Int. Cl.: H02G 3/20, F21V 21/03

(54) **CEILING BOX INSTALLATION ASSEMBLY**

(30) Priority: 11.11.2022 IN 202231064655
(71) Applicant: SCHNEIDER ELECTRIC INDUSTRIES SAS, 92500 Rueil-Malmaison (FR)
(72) Inventor: CHIKKANNA, Manohar, 560073 Bangalore (IN); QUADRI, Syed Mansur, 560032 Bengaluru (IN)
(74) Representative: Lavoix

(57) **Abstract**

The present invention provides a ceiling box installation assembly (100) to secure electrical fixtures suspended from a ceiling (146). The ceiling box installation assembly (100) comprises a ceiling junction box (102), at least a pair of oppositely disposed grooved cuts (110) and a fixing assembly (116). The fixing assembly (116) comprises: at least a pair of claw fasteners (118), at least a pair of claw members (120), and at least a pair of mounting brackets (124). The mounting brackets (124) comprise a first opening (126) to receive said claw fasteners (118), and a second opening (128) disposed adjacent to said first opening (126) to hang said electrical fixture. The mounted brackets are fitted with said claw fasteners (118) disposed at a proximal end (112) of said grooved cuts (110) to hang said electrical fixture and transferring its weight to said claw members (120).

## Description

### Field of invention:

The present invention generally relates to installation of electrical outlet boxes on the ceiling to accommodate different electrical equipment such as lighting fixtures to hang therefrom. More particularly, the present invention relates to improvement in installation of ceiling junction boxes by transfer and redistribution of weights from the electrical devices.

### Background of the invention:

Electrical equipment such as lighting fixtures, fans and the like are typically installed by mounting them directly to a ceiling junction box, or a junction box in general. Junction boxes, based on their uses and user requirements, are in general installed within a wall, ceiling, or other surface. Conventionally, junction box includes compartment having an opening at its front portion with mounting tabs projecting across the open front. The mounting tabs include threaded openings for accepting screws or bolts for mounting a fixture, cover plate etc.

In many installation practices, the junction box is installed in a recessed fashion within the surface to provide a flush mount of the fixture against the surface while complying with various industry standards, including standard dimensions and locations for attaching a fixture to the junction box. In buildings having concrete or wooden ceilings and walls, there are different problems involved in attaching electric wiring and interior fittings. In such ceiling, the positioning of outlet boxes and similar fittings must be decided in advance and cannot be changed subsequently thus the fixtures has to be certainly pre-located. Also the interior fittings have to be attached to mounting means embedded in the concrete in connection with the concrete at fixed places. Typically, installation of the junction box and electrical fixtures are carried out by a licensed electrician. In many cases, the step of mounting a fixture to the junction box is a time-consuming process requiring forming individual connections of multiple wires, followed by fastening the fixtures to the junction boxes.

Further, various considerations are necessary in providing holding support to the electrical equipment and fixtures for ceiling-mounted junction boxes. There exists specific maximum limit weight for ceiling light fixtures, ceiling fans etc. Thus it becomes very important that an installer use adequate load-bearing fasteners for securing the junction box with beams of the ceiling such that the weight if the fixtures are taken care of. It is also important that the load be transferred to the beams, and not by the junction box. In a known process of installation, a user has to install a ceiling fixture to the assembly, the installer first affixes the ceiling box to the adjustable mounting brace through the elongated screw holes on the bottom of the ceiling box. Then the installer affixes the ceiling fixture by aligning screw holes on the slider with the screw holes on the ceiling box flange and screw tabs using screws.

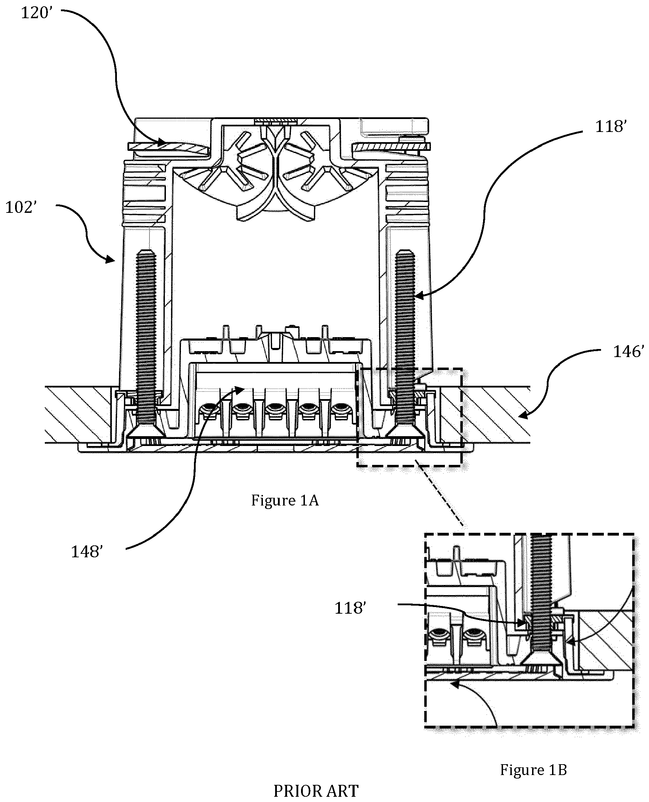

In one such conventional mounting practice of mounting ceiling junction box (102') and electrical fixture (148') are depicted in figures 1A and 1B. The claw members (120') of the junction box have to be fixed prior to the installation of the fixture (148'). Next, the outlet for the electrical fixture (148') is screwed with the junction box (102') in such a manner that the claw members (120') only partially bear the weight of the fixture. Since there is no interlinking between the claw member (120') and fixing screw (118') of the electrical fixture (148'), a substantial amount of weight has to be sustained by the junction box (102') itself.

And so, there is a need for improvement in the presently available installation system to mitigate the below shortcomings:
- non-metallic ceiling boxes cannot bear the suspension load, leading to deformation and breakage or crack in the ceiling box;
- existing ceiling boxes cannot be mounted front (of ceiling), to be used in retro fits or renovation;
- front mounted ceiling does not have access to celling structure to transfer the suspension load.

With a view therefore to overcome the drawbacks associated with conventional systems and method of mounting and installation of ceiling boxes, the inventors devised a novel ceiling box mounting assembly. In the present installation assembly, the complete celling structure can be made and then the hole can be drilled from the outside the thereupon the ceiling box can be mounted. Further, the present invention provides an improved fixing mechanism that redirects the weights of the hanging fixtures to the beams of the ceiling rather than putting weight on the junction box.

### Summary of the invention:

Accordingly, the present invention provides a ceiling box installation assembly to secure electrical fixtures suspended from a ceiling, wherein said ceiling box installation assembly comprising:
- a ceiling junction box having a front portion, a base portion, and side walls connected with said front portion and base portion;
- at least a pair of grooved cuts extending along outer surface of said side walls, having a proximal end and a distal end; and
- a fixing assembly attached with ceiling junction box to adjustably fix said electrical fixture thereon, said fixing assembly comprises:
   - at least a pair of claw fasteners disposed through said proximal end of said grooved cut towards said base portion;
   - at least a pair of claw members disposed on each of the distal end of said grooved cuts, wherein each of said claw members comprises a fixing hole through which said claw member is rotatably attached with corresponding claw fastener; and
   - at least a pair of mounting brackets disposed at the proximal end of said grooved cuts, each of said mounting brackets is fitted with said claw fasteners to hang said electrical fixture and transferring its weight to said claw members via said fasteners, wherein said mounting brackets comprise:
      - a first opening to receive said claw fasteners, and
      - a second opening disposed adjacent to said first opening to hang said electrical fixture.

According to one embodiment of the invention, said proximal end of the grooved cuts are disposed behind said front portion of said ceiling junction box, defining a step at said side walls to rest one flat head of said claw fasteners, and said distal end is disposed on said base portion of said ceiling junction box.

According to one embodiment of the invention, said ceiling junction box comprises a first receiving hole disposed on said proximal end of said grooved cut and a second receiving hole disposed on said base portion to receive said claw fastener in a guided manner.

According to one embodiment of the invention, said base portion of said junction box is provided with a claw recesses to accommodate said claw members whereby while mounting said junction box, said claw members are rotated out of said claw recesses.

According to one embodiment of the invention, each of said fixing hole of said claw member has a matching profile to that of said first opening of said mounting bracket to firmly guide the claw fasteners.

According to one embodiment of the invention, said ceiling junction box is provided with a collar disposed around said front portion extending therefrom.

According to one embodiment of the invention, said grooved cuts are disposed at opposite or diametrically opposite faces of said side wall of said celling junction box.

According to one embodiment of the invention, the base portion is provided with plurality of removable strain relief knock-offs for receiving corresponding electrical wire and conduits.

According to another embodiment of the invention, said mounting bracket is one flat bracket attached to said base portion of said ceiling junction box to mount with the ceiling, said flat bracket having at least one pair of receiving caps to receive said corresponding claw fastener.

According to another embodiment of the invention, said flat bracket has a rectangular profile having said receiving caps disposed at its opposite corners and another pair of mounting holes to receive mounting screws to attach said flat bracket with said base portion of said ceiling junction box.

According to another embodiment of the invention, said fixing assembly comprises a pair of threaded bush with rivets to receive corresponding pair of claw fasteners.

### Brief description of the drawings:

Figures 1A-1B depict cut away view of a conventional installation of ceiling box installed in a hollow wall in ceiling application
Figure 2 depicts an assembled perspective view of the invented ceiling box installation assembly according to one embodiment of the invention.
Figure 3 illustrates an exploded view of the invented ceiling box installation assembly according to one embodiment of the invention.
Figure 4 is a cut away sectional view of the installation of invented ceiling box installation assembly, installed to a plaster board or main ceiling.
Figure 5 is cut away cross-sectional view of the engagement fastening members of the ceiling box installation assembly.
Figure 6 illustrates another exploded view of the ceiling box installation assembly provided with mounting brackets disposed at its base portion.
Figure 7 is an assembled view of figure 6.
Figures 8 and 9 depict sectional view of the ceiling box installation assembly, showing the fixing assembly according to one embodiment of the invention.

### Detailed description of the drawings:

In the following, numerous specific details are set forth to provide a thorough description of embodiment. Those skilled in the art will recognize and appreciate that, despite of the detailed nature of the exemplary embodiment provided herein; changes and modifications may be applied to said embodiment without limiting or departing from the generally intended scope.

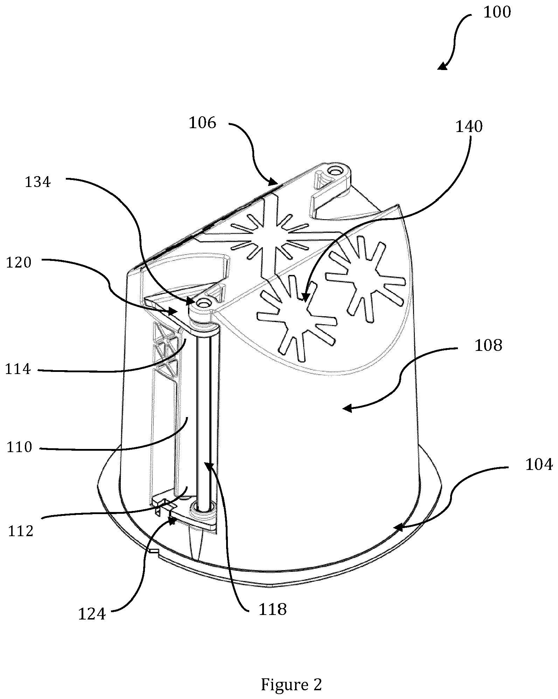

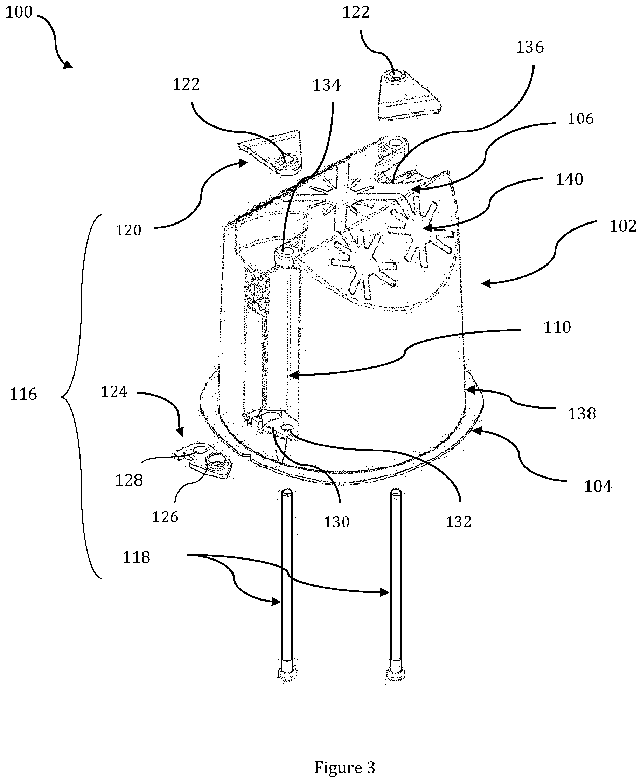

Figures 2 and 3 depict an assembled and an exploded perspective view of an embodiment of invented ceiling box installation assembly (100). The ceiling box installation assembly (100) comprises a ceiling junction box (102), at least a pair of grooved cuts (110), and a fixing assembly (116). The ceiling box installation assembly (100) allows electricians to securely suspend electrical fixtures from a ceiling (146) in such a manner that the weight of the electrical fixture is not prevailing on said ceiling junction box (102). The electrical fixtures include various types of lights, chandeliers, fans, sound systems etc., which are fixed with said ceiling junction box (102) by means of said fixing assembly (116).

The ceiling junction box (102), as shown in figure 3, has a front portion (104), a base portion (106), and side walls (108) connecting said front portion (104) and base portion (106). The ceiling junction box, also referred as junction box (102) for brevity, is provided with a collar (138) disposed around said front portion (104) extending therefrom. According the present embodiment, the junction box (102) can have a tubular side wall (108) with circular front portion (104) defining the opening to receive said electrical fixture. For manufacturing purposes, and based on the type of electrical fixture, the junction box (102) can be a rectangular one while keeping the disposition and functionality said fixing assembly (116) and said grooved cuts (110). The grooved cuts (110) are disposed as opposite pair of surfaces of the side walls (108) of said junction box. For a junction box (102) having tubular side wall (108), the grooved cuts (110) are provided on two diametrically opposite position of the side wall (108). Plurality of grooved cuts (110) may also be disposed in a spaced apart manner.

Each of grooved cuts (110) has a proximal end (112) and a distal end (114). The proximal end (112) is preferably disposed just behind the front portion (104) of the junction box (102) and the distal end (114) is disposed on the base portion (106). The base portion (106) includes a flat surface where said distal end (114) of the grooved cuts (110) finishes. The base portion (106) further includes inclined surfaces, where both the flat surface and the inclined surfaces are provided with plurality of removable strain relief knock-offs (140). The strain relief knock-offs (140) are initially fixed with the base portion (106), which can be removed for receiving corresponding electrical wire and conduits to be attached with the electrical fixture.

With reference to figure 3, the fixing assembly (116) is attached with ceiling junction box (102) to adjustably fix said electrical fixture thereon. In the present embodiment, the fixing assembly (116) comprises a pair of claw fasteners (118), a pair of claw members (120), and a pair of mounting brackets (124). These components can be increased in number which are disposed adjacent to each other. The claw fasteners (118) are disposed along the extension of said grooved cuts (110) and therefore the number of claw fasteners (118), claw members (120), and mounting brackets (124) shall correspond to the number of grooved cuts (110) disposed on the side wall (108) of the junction box (102).

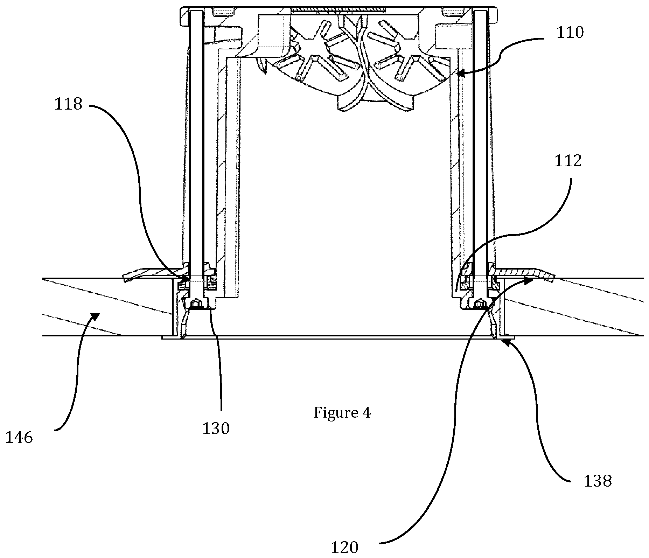

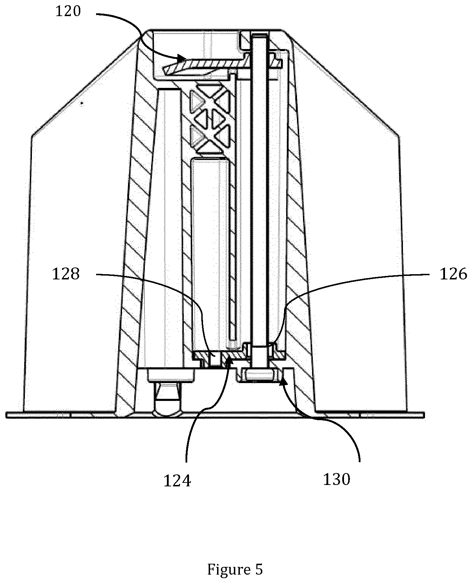

As shown in figures 4 and 5, the claw fastener (118) is inserted through the proximal end (112) of the grooved cuts (110) along the distal end (114) such that it touches the base portion (106) of the junction box (102). The claw members (120) are disposed on each of the distal end (114) close to the base portion (106) of the junction box. The claw members (120), at its proximal part is provided with a fixing hole (122), by means of which it is rotatably attached with the corresponding claw fastener (118). The base portion (106) of said junction box (102) is provided with a pair of claw recesses (136) to accommodate said claw members (120) whereby while mounting said junction box (102), said claw members (120) are rotated out of said claw recesses (136).

With reference to figures 3 to 5 of the accompanying drawings, the proximal end (112) of the grooved cut that defines a step (130) at said side walls (108), allows to rest one flat head of said claw fasteners (118). The pair of mounting brackets (124) are fitted with said claw fasteners (118) disposed each of the proximal end (112) of said grooved cuts (110). The mounting brackets (124) facilitate the hanging of said electrical fixture by transferring its weight to said claw members (120). On said step (130) of the proximal end (112), a first receiving hole (132) is disposed. The first receiving hole (132) facilitates the insertion of the claw fasteners (118). Further, a second receiving hole (134) is disposed on said base portion (106) to receive said claw fastener (118) in a guided manner.

The mounting bracket (124) is provided with a first opening (126) to receive said claw fasteners (118), and a second opening (128) to hang said electrical fixture. The mounting bracket (124) when placed on the proximal end (112) of the grooved cut (110), its first opening (126) is superimposed with said first receiving hole (132) on the step (130). Similarly the fixing hole (122) on said claw member (120) is superimposed with second receiving hole (134) on the base portion (106). Further, fixing hole (122) of said claw member (120) has a matching profile to that of said first opening (126) of said mounting bracket (124) to firmly guide the claw fasteners (118). The second opening (128) of the mounting bracket (124) is disposed adjacent to the first opening (126) based on the size of the junction box (102).

Accordingly, with reference to figure 3 to 5, each of the claw fastener (118) is coupled with the mounting bracket (124) at one end and with the claw member (120) at other end. The claw member (120) is thus rotatably fixed with the claw fastener (118) while being connected to the second receiving hole (134) at the distal end (114), on said base portion (106) of said ceiling junction box (102). Thus, with the present ceiling box installation assembly (100), when an electrical fixture is attached using the second opening (128) at the mounting bracket (124), the weight of the fixture falls on the claw fasteners (118) through first opening (126) of the mounting bracket (124). The claw fasteners (118), being coupled to the claw members (120), the weight is finally traversed to the claw member (120) rather than the junction box (102).

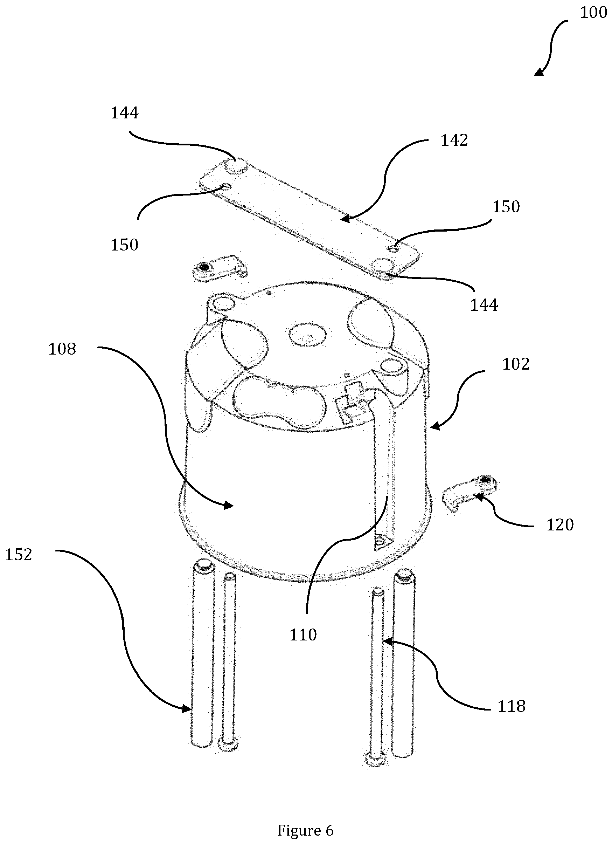

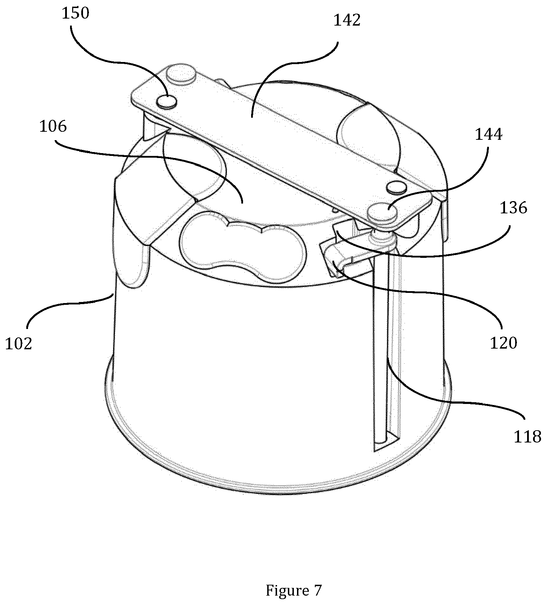

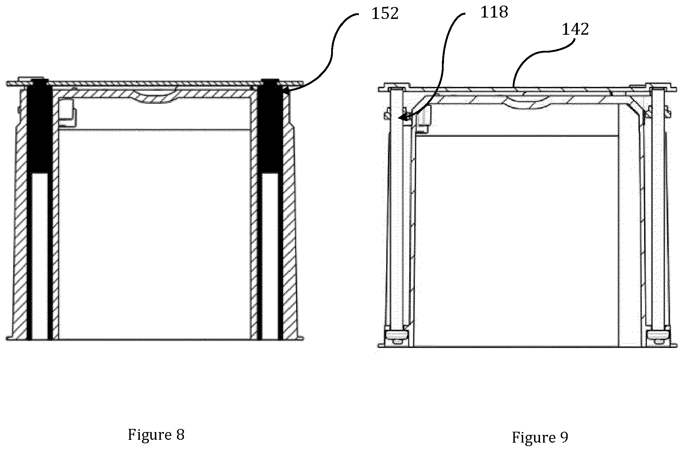

Further, with reference to figures 6 to 9 of the accompanying drawings, the fixing assembly (116) comprises at least one mounting bracket (124) being one flat bracket (142). The flat bracket (142), according to the preferred embodiment, has a rectangular profile, being attached to said base portion (106) providing additional support to mount with the junction box (102). Further, the flat bracket (142) is provided at least one pair of receiving caps (144) at one of its diametrically opposite corners and a pair of mounting holes (150) at other corners. In this particular embodiment, the fixing assembly (116) comprises a pair of threaded bush (152) with rivets to receive corresponding pair of claw fasteners (118). The receiving caps (144) are formed to receive one end of said corresponding claw fasteners (118) and mounting holes (150) to receive mounting screws to attach said flat bracket (142) to said base portion (106) of said ceiling junction box (102). As seen in figure 7, the threaded bush (152) can be attached with the receiving caps (144) of the flat bracket (142), where the claw members (120) are disposed just below said receiving caps (144) resting on said claw recess (136).

As already mentioned, the foregoing description is illustrative of the invention and not limitative to its scope, because it will be apparent to persons skilled in the art to devise other alternative embodiments without departing from the broad ambit of the disclosures made herein.

### Part-List:

| | | | |
|---|---|---|---|
| Ceiling box installation assembly | 100 | Strain relief knock-offs | 140 |
| Ceiling junction box | 102 | Flat bracket | 142 |
| Front portion | 104 | Receiving caps (on flat bracket) | 144 |
| Base portion | 106 | Ceiling | 146 |
| Side walls | 108 | Mounting hole | 150 |
| Grooved cuts | 110 | Threaded bush | 152 |
| Proximal end | 112 | | |
| Distal end | 114 | | |
| Fixing assembly | 116 | | |
| Claw fasteners | 118 | | |
| Claw members | 120 | | |
| Fixing hole (of claw member) | 122 | | |
| Mounting brackets | 124 | | |
| First opening | 126 | | |
| Second opening | 128 | | |
| Step (at the proximal end) | 130 | | |
| First receiving hole | 132 | | |
| Second receiving hole | 134 | | |
| Claw recesses | 136 | | |
| Collar 138 | | | |

## Claims

1. A ceiling box installation assembly (100) to secure an electrical fixture suspended from a ceiling (146), said ceiling box installation assembly (100) comprising:
- a ceiling junction box (102) having a front portion (104), a base portion (106), and side walls (108) connected with said front portion (104) and said base portion (106);
- at least a pair of grooved cuts (110) extending along outer surface of said side walls (108), said grooved cuts (110) having a proximal end (112) and a distal end (114); and
- a fixing assembly (116) attached with ceiling junction box (102) to adjustably fix said electrical fixture thereon, said fixing assembly (116) comprises:
- at least a pair of claw fasteners (118) disposed between said proximal end (112) of said grooved cuts (110) and said base portion (106);
- at least a pair of claw members (120) disposed on the distal end (114) of each of said grooved cuts (110), wherein each of said claw members (120) comprises a fixing hole (122) through which said claw member (120) is rotatably attached with corresponding claw fastener (118); and
- at least a pair of mounting brackets (124) disposed at each of the proximal end (112) of said grooved cuts (110), each of said mounting brackets (124) is fitted with said claw fasteners (118) to hang said electrical fixture and transferring its weight to said claw members (120) via said fasteners (118), wherein said mounting brackets (124) comprise:
- a first opening (126) to receive said claw fasteners (118), and
- a second opening (128) disposed adjacent to said first opening (126) to hang said electrical fixture.

2. The ceiling box installation assembly (100) as claimed in claim 1, wherein said proximal end (112) of the grooved cuts (110) is disposed behind said front portion (104) of said ceiling junction box (102) defining a step (130) at said side walls (108) to rest one flat head of said claw fasteners (118), and said distal end (114) is disposed on said base portion (106) of said ceiling junction box (102).

3. The ceiling box installation assembly (100) as claimed in claim 1 or 2, wherein said ceiling junction box (102) comprises a first receiving hole (132) disposed on said proximal end (112) of said grooved cuts (110) and a second receiving hole (134) disposed on said base portion (106) to receive said claw fastener (118) in a guided manner.

4. The ceiling box installation assembly (100) as claimed in any of the claims 1 to 3, wherein said base portion (106) of said ceiling junction box (102) is provided with a claw recesses (136) to accommodate said claw members (120) whereby while mounting said junction box (102), said claw members (120) are rotated out of said claw recesses (136).

5. The ceiling box installation assembly (100) as claimed in any of the claims 1 to 4, wherein each of said fixing hole (122) of said claw member (120) has a matching profile to that of said first opening (126) of said mounting bracket (124) to firmly guide the claw fasteners (118).

6. The ceiling box installation assembly (100) as claimed in any of the claims 1 to 5, wherein said ceiling junction box (102) is provided with a collar (138) disposed around said front portion (104) extending therefrom.

7. The ceiling box installation assembly (100) as claimed in any of the claims 1 to 6, wherein said grooved cuts (110) are disposed at opposite or diametrically opposite faces of said side wall (108) of said celling junction box (102).

8. The ceiling box installation assembly (100) as claimed in any of the claims 1 to 7, wherein the base portion (106) is provided with plurality of removable strain relief knock-offs (140) for receiving corresponding electrical wire and conduits.

9. The ceiling box installation assembly (100) as claimed in any of the claims 1 to 8, wherein said mounting bracket (124) is one flat bracket (142) attached to said base portion (106) of said ceiling junction box (102) to mount with the ceiling, said flat bracket (142) having at least one pair of receiving caps (144) to receive corresponding claw fastener (118).

10. The ceiling box installation assembly (100) as claimed in claim 9, wherein said flat bracket (142) has a rectangular profile having said receiving caps (144) disposed at its opposite corners and another pair of mounting holes (150) to receive mounting screws to attach said flat bracket (142) with said base portion (106) of said ceiling junction box (102).

11. The ceiling box installation assembly (100) as claimed in any of the claims 1 to 10, wherein said fixing assembly (116) comprises a pair of threaded bush (152) with rivets to receive corresponding pair of claw fasteners (118).
